# EUROPÄISCHE PATENTSCHRIFT

(11) **EP 0 878 555 B1**
(45) Veröffentlichungstag und Bekanntmachung des Hinweises auf die Patenterteilung: **25.07.2001**
(21) Anmeldenummer: 98108585.5
(22) Anmeldetag: 12.05.1998
(51) Int. Cl.: C21D 9/00, F27B 9/14, B65G 49/04

(54) **Vorrichtung zum Führen von Werkstücken**
Workpiece guiding device
Dispositif pour guider des pièces

(30) Priorität: 14.05.1997 DE 19720102
(43) Veröffentlichungstag der Anmeldung: 18.11.1998
(73) Patentinhaber: ELOTHERM GmbH, D-42855 Remscheid (DE)
(72) Erfinder: Kliesow, Wolfgang, 42855 Remscheid (DE); Stengel, Edgar, 42349 Wuppertal (DE)
(74) Vertreter: Cohausz & Florack Patentanwälte

(56) Entgegenhaltungen:
- DE-A- 1 583 323
- DE-A- 2 241 736
- FR-A- 998 476

## Beschreibung

Die Erfindung betrifft eine Vorrichtung zum Führen von Werkstücken mit mindestens einer kurvenförmigen Führungsbahn, deren Eingang und Ausgang fluchtend angeordnet sind. Derartige Vorrichtungen werden beispielsweise in Anlagen eingesetzt, in denen Schmiedestücke erwärmt und graphitiert werden. Bei solchen Anlagen ist die kurvenförmige Führungsbahn durch ein Graphitierbecken geführt, so daß die Werkstücke auf ihrem Förderweg durch das Graphitierbecken geleitet und mit Graphitiermittel benetzt werden. Anschließend werden sie durch die sich anschließende geradlinige Führungsbahn in einer geradlinigen Förderbewegung durch die auf das Graphitierbecken folgenden Erwärmungseinrichtungen geführt.

Der Antrieb der Werkstücke erfolgt bei Anlagen der voranstehend genannten Art in der Regel durch im Eingangsbereich der Vorrichtung angeordnete, die Werkstücke seitlich erfassende Rollenantriebe. Durch diese Rollenantriebe wird das jeweils neu in die Führungsbahn eingespeißte Werkstück vorgetrieben. Es schiebt dabei die vor ihm in der Führungsbahn angeordneten Werkstücke voran. Alternativ sind Anlagen bekannt, bei denen mehrere Antriebe vorgesehen sind. Diese sind in bestimmten Abständen seitlich der Führungsbahn angeordnet, so daß die Werkstücke auf ihrem Förderweg mehrfach einen Antriebsschub erfahren.

Ein grundsätzliches Problem beim Einsatz von mit Kurvenführungen ausgestatteten Vorrichtungen der eingangs genannten Art in Anlagen, durch welche die Werkstücke kontinuierlich gefördert werden, besteht darin, daß sich diese Bahnen nur schwer automatisch leeren lassen. Ein solches Leeren ist zum Beispiel dann erforderlich, wenn eine bestimmte Charge von Werkstücken fertig bearbeitet worden ist oder wenn es zu Störungen im Betrieb der mit der Führungsvorrichtung ausgestatteten Anlage kommt. Ausstoßer, wie sie bei rein linear ausgebildeten Führungsbahnen zum Ausstoßen noch im Führungsweg befindlicher Werkstücke eingesetzt werden, lassen sich bei kurvenförmigen Führungsbahnen nicht verwenden. Aus diesem Grund muß das Leeren der kurvenförmigen Führungsbahn bei den aus der Praxis bekannten Vorrichtungen zeitaufwendig per Hand durchgeführt werden.

Die Aufgabe der Erfindung besteht darin, mit einfachen, kostengünstigen Mitteln eine Vorrichtung der eingangs genannten Art zu schaffen, mit der ein automatisches Leeren der Führungsbahn problemlos möglich ist.

Diese Aufgabe wird dadurch gelöst, daß eine derartige Vorrichtung mit einer Führungseinrichtung mit mindestens einem Abschnitt ausgestattet ist, welcher aus einer Ruheposition, in welcher sich bei Gebrauch der Vorrichtung Werkstücke in der kurvenförmigen Führungsbahn befinden, unter Mitnahme dieser Werkstücke in eine Position bewegbar ist, in welcher er die kurvenförmige Führungsbahn geradlinig von ihrem Eingang bis zu ihrem Ausgang überbrückt.

Bei der erfindungsgemäßen Vorrichtung ist es möglich, die kurvenförmige Führungsbahn durch eine Führungseinrichtung derart zu überbrücken, daß die Werkstücke geradlinig über die durch die kurvenförmige Führungsbahn vorgegebenen Kurven hinweg bewegt werden. Dabei ist die Führungseinrichtung derart angeordnet, daß sie, sobald sie in den Führungsweg verstellt wird, auch die zuvor noch in der Kurve der kurvenförmigen Führungsbahn befindlichen Werkstücke mit in die geradlinige Führungsbahn überführt. Auf diese Weise ist es möglich, in herkömmlicher, kostengünstiger Weise einen Ausstoßer zum Leeren der Vorrichtung zu nutzen. Der für die Führungseinrichtung und deren Verstellung erforderliche Aufwand ist so gering, daß auch vorhandene Führungsvorrichtungen kostengünstig in der erfindungsgemäßen Weise umgerüstet werden können.

Die erfindungsgemäße Vorrichtung ist besonders zur Verwendung in einer Anlage geeignet, innerhalb der Werkstücke vor dem Schmieden erwärmt und graphitiert werden. Insbesondere in einer solchen Anlage ist die kurvenförmige Führungsbahn der erfindungsgemäßen Vorrichtung vorzugsweise an eine geradlinig ausgebildete Führungsbahn angeschlossen, welche fluchtend zu einer zweiten in Förderrichtung hinter der kurvenförmigen Führungsbahn folgenden geradlinigen Führungsbahn angeordnet ist.

Eine bevorzugte Ausgestaltung der Erfindung ist dadurch gekennzeichnet, daß die Werkstücke an gegenüberliegenden Seiten von jeweils einer kurvenförmigen Führungsbahn geführt sind und diejenige der Führungsbahnen, die dem bewegbaren Abschnitt der Führungseinrichtung gegenüberliegt, gemeinsam mit dem bewegbaren Abschnitt verstellbar ist. Durch eine derart doppelte Führung ist sichergestellt, daß die Werkstücke auch im Kurvenbereich exakt geführt werden. Gleichzeitig ist durch die Verkopplung des verstellbaren Abschnitts der kurvenförmigen Führungsbahn mit dem verstellbaren Abschnitt der Führungseinrichtung gewährleistet, daß der bewegbare Abschnitt der kurvenförmigen Führungsbahn bei der Verstellung des Abschnitts der Führungseinrichtung mit diesem bewegt wird. So ist in dem Fall, daß die Führungseinrichtung sich zum Leerfahren in ihrer Überbrückungsstellung befindet, sichergestellt, daß der obere Abschnitt der kurvenförmige Führungsbahn den geradlinigen Transport der Werkstücke nicht behindert.

Eine besonders einfach herzustellende Variante der Erfindung ist dadurch gekennzeichnet, daß die Breite der Abschnitte kurvenförmigen Führungsbahn kleiner ist als die Breite der Werkstücke und daß jeweils ein verstellbarer Abschnitt der Führungseinrichtung seitlich der kurvenförmigen Führungsbahn angeordnet ist. Die verhältnismäßig geringe Breite der Abschnitte der kurvenförmigen Führungsbahn ermöglicht es problemlos, seitlich von dieser die Führungseinrichtungen so anzuordnen, daß diese die Werkstücke im Fall ihrer Verstellung sicher führen.

Vorzugsweise ist die Führungseinrichtung stagenförmig ausgebildet. Eine derartige Führungsstange nimmt nur einen geringen Raum ein und ermöglicht bei einem Linienkontakt eine reibungsarme, sichere Führung der Werkstücke.

Nachfolgend wird die Erfindung anhand einer ein Ausführungsbeispiel darstellenden Zeichnung näher erläutert. Es zeigen schematisch:
- Fig. 1: eine Anlage zum Erwärmen und Graphitieren von Schmiedestücken in seitlicher Ansicht;

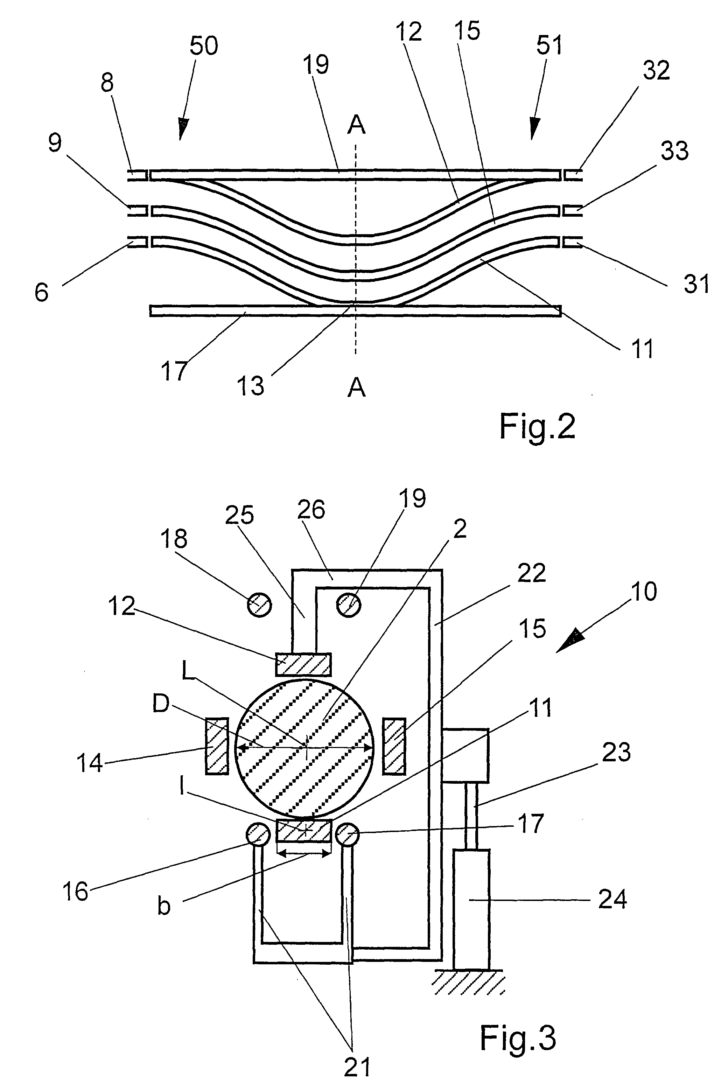

- Fig. 2: eine in der in Fig. 1 gezeigten Anlage eingesetzte Vorrichtung zum Führen der Schmiedestücke in seitlicher Ansicht;
- Fig. 3: die in Fig. 2 gezeigte Vorrichtung in einem Schnitt entlang der in Fig. 2 angegebenen Schnittlinie A-A;

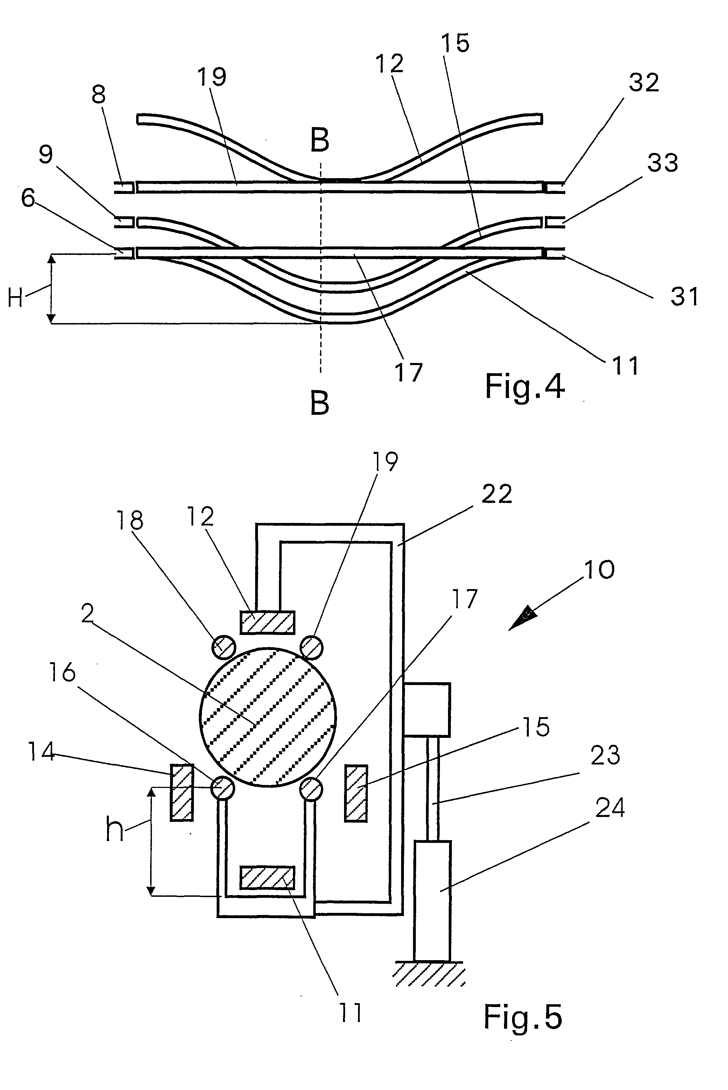

- Fig. 4: die in Fig. 2 gezeigte Vorrichtung in einer zweiten Betriebsstellung;
- Fig. 5: die in Fig. 4 gezeigte Vorrichtung in einem Schnitt entlang der in Fig. 4 angegebenen Schnittlinie B-B.

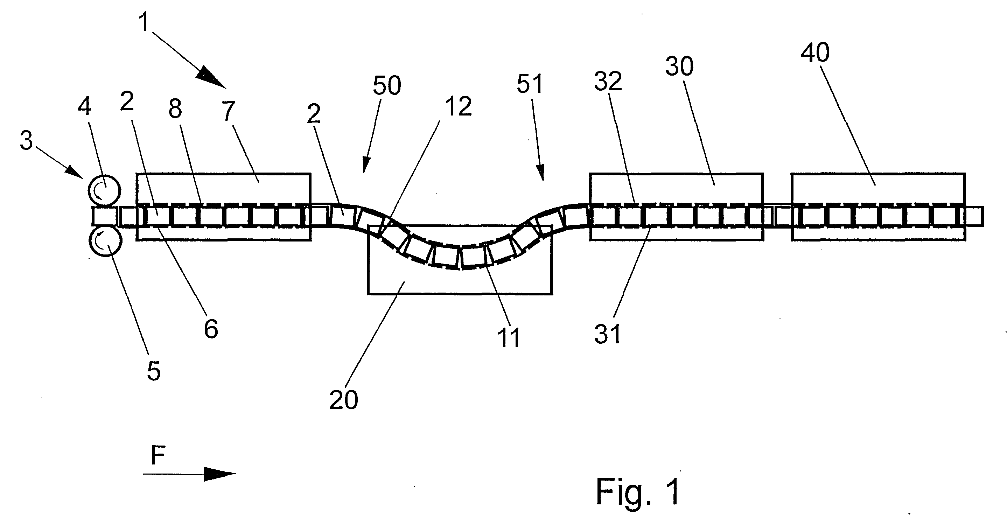

Die in Fig. 1 gezeigte Anlage 1 zum Erwärmen und Graphitieren von zylinderförmigen Schmiedestücken 2 weist einen Antrieb 3 auf, dessen Antriebsrollen 4,5 beidseitig eingangs einer ersten geradlinig ausgebildeten Führungsbahn 6 angeordnet sind. Im Anschluß an den Antrieb 3 durchlaufen die Schmiedestücke 2 auf der geradlinigen Führungsbahn 6 eine erste Erwärmungsstation 7. Innerhalb der Erwärmungsstation 7 und im Bereich von deren Ausgang sind die Schmiedestücke 2 zusätzlich sowohl von oben durch obere Führungsbahnen 8 als auch seitlich durch seitliche Führungsbahnen 9 geführt. Die Führungsbahnen 8,9 sind wie die untere Führungsbahn 6 geradlinig ausgebildet.

In Förderrichtung F hinter der ersten Erwärmungsstation 7 ist an die geradlinige Führungsbahn 6 eine Vorrichtung 10 angeschlossen, mit der die Schmiedestücke 2 in ein auf einem niedrigeren Flurniveau aufgestelltes Graphitierbecken 20 geleitet werden. In Förderrichtung F hinter der Vorrichtung 10 ist eine zweite Erwärmungseinrichtung 30 und eine dritte Erwärmungseinrichtung 40 angeordnet. Durch diese Erwärmungseinrichtungen 30,40 werden die Schmiedestücke 2 geradlinig über untere Führungsbahnen 31, obere Führungsbahnen 32 und seitliche Führungsbahnen 33 geführt, welche jeweils fluchtend zu der jeweiligen ersten unteren Führungsbahn 6, der ersten oberen Führungsbahn 8 bzw. der ersten seitlichen Führungsbahn 9 ausgerichtet sind.

Die Vorrichtung 10 weist eine erste durch nicht gezeigte Halter fest gehaltene untere Führungsbahn 11 auf, der gegenüberliegend eine zweite, verstellbare obere Führungsbahn 12 zugeordnet ist. Die Führungsbahnen 11,12 sind kurvenförmig ausgebildet, wobei die Kurve nach Art einer Welle geformt ist. Ihre Enden sind im Normalbetrieb auf dem Niveau der unteren geradlinigen Führungsbahnen 6,31 bzw. der oberen Führungsbahnen 8,32 angeordnet, während der Scheitelpunkt 13 der unteren Führungsbahn 11 so angeordnet ist, daß die Schmiedestücke 2 bei Erreichen dieses Punktes vollständig von der in dem Graphitierbecken 20 enthaltenen Flüssigkeit bedeckt sind. Gleichzeitig ist der vertikale Abstand der Führungsbahnen 11,12 derart gewählt, daß die Schmiedestücke 2 sowohl an ihrer Ober- als auch an ihrer Unterseite während des gesamten Förderweges sicher geführt sind.

Die Führungsbahnen 11,12 sind bezüglich ihrer Längsachse 1 mittig zur Längsachse L der Schmiedestücke 2 ausgerichtet. Ihre Breite b entspricht annähernd der Hälfte der Breite D der Schmiedestücke 2.

Zur zusätzlichen Sicherung sind gegenüberliegend angeordnete seitliche Führungsbahnen 14,15 vorgesehen, deren Form dem Verlauf der Führungsbahnen 11,12 angepaßt ist. Die seitlichen Führungsbahnen 14,15 stützen die Schmiedestücke 2 seitlich im Kurvenbereich ab.

An jeder Seite der unteren Führungsbahn 11 erstreckt sich jeweils ein als gerade Führungsstange ausgebildeter Abschnitt 16,17 einer Führungseinrichtung. Der Abstand und Durchmesser der Abschnitte 16,17 der Führungseinrichtung ist so gewählt, daß sich beide geraden Abschnitte 16,17 innerhalb des durch die seitlichen Führungsbahnen 14,15 seitlich begrenzten Raums befinden. Jedem der Abschnitte 16,17 der Führungseinrichtung ist jeweils ein weiterer als gerade Führungsstange ausgebildeter oberer Abschnitt 18,19 der Führungseinrichtung zugeordnet. Die Abschnitte 18,19 sind durch nicht gezeigte Halter fest auf dem durch die oberen geradlinigen Führungsbahnen 8,32 festgelegten Niveau ausgerichtet .

Die unteren bewegbaren Abschnitte 16,17 der Führungseinrichtung sind über Halterelemente 21 und ein U-förmiges Gestell 22 mit dem Hubkolben 23 eines Stellzylinders 24 verbunden. Ebenso ist die obere kurvenförmige Führungsbahn 12 über Halterelemente 25 fest an das U-förmige Gestell 22 angeschlossen. Dabei ist die Länge des oberen Schenkels 26 des U-förmigen Gestells 22 derart gewählt, daß das Gestell 22 mit dem Halterelement 25 die der Seite des Stellzylinders 24 zugeordnete obere Führungseinrichtung 19 von oben umgreift. Gleichzeitig entspricht die Höhe h der Halterelemente 21,25 der Höhe H, um die der Scheitelpunkt 13 der unteren kurvenförmigen Führungsbahn 11 niedriger liegt als die untere geradlinige Führungsbahn 6.

Im Normalbetrieb befindet sich der Hubkolben 23 des Stellzylinders 24 in seiner eingezogenen Stellung, so daß die bewegbaren Abschnitte 16,17 der Führungseinrichtung sich auf dem Niveau des Scheitels 13 der unteren kurvenförmigen Führungsbahn 11 und die Enden der oberen kurvenförmigen Führungsbahn 12 auf Höhe der oberen geradlinigen Führungsbahnen 8, 32 ausgerichtet sind. Die durch den Antrieb 3 Stück für Stück voran geschobenen und in der ersten Erwärmungseinrichtung 7 auf die optimale Graphitiertemperatur gebrachten Schmiedestücke 2 werden in dieser Betriebsstellung durch die Führungsbahnen 11,12,14,15 zunächst in das Graphitierbecken 20 und anschließend zu den weiteren Erwärmungsstationen 30,40 geleitet.

Zum Leerfahren der Anlage 1 wird der Hubkolben 23 mittels des Stellzylinders 24 angehoben, bis sich die unteren, bewegbaren Abschnitte 16,17 der Führungseinrichtung auf dem Niveau der unteren geradlinigen Führungsbahnen 6,31 befinden. Die sich noch in dem Graphitierbecken 20 befindenden Schmiedestücke 2 werden dabei durch die Abschnitte 16,17 der Führungseinrichtung angehoben. Aufgrund der festen Verkopplung der bewegbaren Abschnitte 16,17 der Führungseinrichtung mit der oberen kurvenförmigen Führungsbahn 12 wird diese ebenfalls angehoben, so daß sie sich bei Erreichen der Leerfahrstellung nicht mehr in dem dann durch die bewegbaren Abschnitte 16,17 und die feststehenden Abschnitte 18,19 der Führungseinrichtung festgelegten geradlinigen Förderweg befindet. Nachdem die bewegbaren Abschnitte 16,17 der Führungseinrichtung ihre mit dem Niveau der unteren geradlinigen Führungsbahnen 6,31 übereinstimmende Leerfahrstellung erreicht haben, werden die Schmiedestücke 2 vom Eingang 50 der Führungsbahnen 11,12 geradlinig zu deren Ausgang 51 geführt. In diesem Betriebszustand können die sich noch in der Anlage 1 befindenden Schmiedestücke 2 mittels eines nicht gezeigten, herkömmlichen Ausstoßers ausgestoßen werden.

## Patentansprüche

1. Vorrichtung zum Führen von Werkstücken (2) mit mindestens einer kurvenförmigen Führungsbahn (11,12,14,15), deren Eingang (50) und Ausgang (51) fluchtend angeordnet sind, **gekennzeichnet durch** eine Führungseinrichtung mit mindestens einem Abschnitt (16,17), welcher aus einer Ruheposition, in welcher sich bei Gebrauch der Vorrichtung Werkstücke (2) in der kurvenförmigen Führungsbahn (11,12) befinden, unter Mitnahme dieser Werkstücke (2) in eine Position bewegbar ist, in welcher er die kurvenförmige Führungsbahn (11,12,14,15) geradlinig von ihrem Eingang (50) bis zu ihrem Ausgang (51) überbrückt.

2. Vorrichtung nach Anspruch 1, **dadurch gekennzeichnet, daß** die kurvenförmige Führungsbahn (11,12,14,15) an eine geradlinige Führungsbahn (6,8) angeschlossen ist, welche fluchtend zu einer zweiten in Förderrichtung (F) hinter der kurvenförmigen Führungsbahn (11,12,14,15) folgenden geradlinigen Führungsbahn (31,32) angeordnet ist.

3. Vorrichtung nach einem der voranstehenden Ansprüche, **dadurch gekennzeichnet, daß** die Werkstücke (2) an gegenüberliegenden Seiten von jeweils einer kurvenförmigen Führungsbahn (11,12,14,15) geführt sind und **daß** diejenige der Führungsbahnen (12), die dem bewegbaren Abschnitt (16,17) der Führungseinrichtung (16 - 19) gegenüberliegt, gemeinsam mit dem bewegbaren Abschnitt (16,17) verstellbar ist.

4. Vorrichtung nach einem der voranstehenden Ansprüche, **dadurch gekennzeichnet, daß** die Breite (B) der Abschnitte (11,12,14,15) der kurvenförmigen Führungsbahn kleiner ist als die Breite (D) der Werkstücke (2) und **daß** jeweils ein verstellbarer Abschnitt (16,17) der Führungseinrichtung (16 - 19) seitlich der kurvenförmigen Führungsbahn (11,12,14,15) angeordnet ist.

5. Vorrichtung nach einem der voranstehenden Ansprüche, **dadurch gekennzeichnet, daß** die Führungseinrichtung (16,17,18,19) stangenförmig ausgebildet ist.

## Claims

1. A device for guiding workpieces (2), comprising at least one curved guideway (11, 12, 14, 15) whose entry (50) and exit (51) are in alignment with each other, characterised by a guide arrangement with at least one section (16, 17) which from a home position in which when the device is in use, workpieces (2) are present in the curved guideway (11, 12), said section (16, 17), while taking said workpieces (2) along, being moveable into a position in which said section (16, 17) bridges the curved guideway (11, 12, 14, 15) in a straight line from its entry (50) right through to its exit (51).

2. The device according to claim 1, characterised in that the curved guideway (11, 12, 14, 15) is connected to a straight guideway (6, 8) which is in alignment with a second straight guideway (31, 32) following behind the curved guideway (11, 12, 14, 15) in the direction of transport (F).

3. The device according to one of the preceding claims, characterised in that the workpieces (2) on opposite sides are guided by a curved guideway (11, 12, 14, 15) each, and that that guideway (12) which is opposite the movable section (16, 17) of the guide arrangement (16 - 19), is adjustable together with the movable section (16, 17).

4. The device according to one of the preceding claims, characterised in that the width (B) of the sections (11, 12, 14, 15) of the curved guideway is less than the width (D) of the workpieces (2) and in that in each instance one adjustable section (16, 17) of the guide arrangement (16 - 19) is arranged at the side of the curved guideway (11, 12, 14, 15).

5. The device according to one of the preceding claims, characterised in that the guide arrangement (16, 17, 18, 19) is rod-shaped.

## Revendications

1. Dispositif pour le guidage de pièces (2) avec au moins une glissière de forme courbe (11, 12, 14,15), dont l'entrée (50) et la sortie (51) sont alignées, **caractérisé par** une installation de guidage avec au moins une section (16, 17), qui peut, à partir d'une position de repos, dans laquelle, lors de l'utilisation du dispositif, les pièces (2) se trouvent dans la glissière (11, 12), en entraînant ces pièces (2), être déplacée en une position où cette section traverse la glissière courbe (11, 12, 14, 15) en ligne droite de son entrée (50) à sa sortie (51).

2. Dispositif selon la revendication 1, **caractérisé en ce que** la glissière courbe (11, 12, 14, 15) est reliée à une glissière rectiligne (6, 8) qui est alignée par rapport à une deuxième glissière rectiligne lui succédant (31, 32) dans le sens de convoyage (F) derrière la glissière courbe (11, 12, 14, 15).

3. Dispositif selon une des revendications précédentes, **caractérisé en ce que** les pièces (2) sont guidées sur les côtés opposés de chaque glissière courbe (11, 12, 14, 15) et **que** celle des glissières courbes (12) qui est située en face de la section mobile (16, 17) du dispositif de guidage (16 - 19) est décalable en même temps que la section mobile (16, 17).

4. Dispositif selon une des revendications précédentes, **caractérisé en ce que** la largeur (B) des sections (11, 12, 14, 15) de la glissière courbe est inférieure à la largeur (D) des pièces (2) et **qu'**à chaque fois une section ajustable (16, 17) du dispositif de guidage (16 - 19) est placée sur le côté de la glissière courbe (11, 12, 14, 15).

5. Dispositif selon une des revendications précédentes, **caractérisé en ce que** le dispositif de guidage (16, 17, 18, 19) est en forme de barre.
